# EUROPÄISCHE PATENTSCHRIFT

(11) **EP 0 446 755 B1**
(45) Veröffentlichungstag und Bekanntmachung des Hinweises auf die Patenterteilung: **12.10.1994**
(21) Anmeldenummer: 91103246.4
(22) Anmeldetag: 04.03.1991
(51) Int. Cl.: F16F 15/22, B06B 1/16

(54) **Schüttelbock**
Shaker
Appareil d'ébranlement

(30) Priorität: 06.03.1990 DE 4007005
(43) Veröffentlichungstag der Anmeldung: 18.09.1991
(73) Patentinhaber: SULZER-ESCHER WYSS GMBH, D-88183 Ravensburg (DE)
(72) Erfinder: Biondetti, Mario, I-36015 Schio/Vicenza (IT)

(56) Entgegenhaltungen:
- EP-A- 0 303 799
- EP-A- 0 409 462
- AT-B- 375 845
- DE-C- 2 633 578
- FR-A- 1 147 256
- GB-A- 313 108
- US-A- 4 393 690

## Beschreibung

Die Erfindung bezieht sich auf einen Schüttelbock gemäß den Merkmalen wie sie im Oberbegriff sowohl des Anspruchs 1 als auch des Anspruchs 2 angegeben sind.

Ein Schüttelbock, von dem die Erfindung aus geht, ist aus der DE-PS 37 27 742 bekannt. Ein derartiger Schüttelbock wird z.B. zum Schütteln von schweren Walzen einer Papiermaschine benutzt, um durch das Schütteln die Entwässerung und die Qualität der entstehenden Papierbahn zu erhöhen. Die Schüttelbewegung wird dabei in horizontaler Richtung ausgeübt, wobei wegen der unveränderlichen Länge des Papiermaschinen-Siebes eine eindimensionale Bewegung quer zur Laufrichtung erzeugt wird mit zwei Umkehrpunkten. Das Schütteln der großen Masse der Walzen in ihrer axialen, d.h. horizontalen Richtung verursacht bei dem ständigen hin- und hergehenden Beschleunigen und Bremsen der Masse entsprechend große Erschütterungen, die über die Konstruktion der Maschine von der Unterlage der Maschine aufgenommen werden müssen. Dies beeinträchtigt und belastet das ganze Gebäude, in dem die Maschine aufgestellt ist. Durch einen derartigen bekannten Schüttelbock werden die beim Schütteln auftretenden Kräfte nahezu vollständig kompensiert.

Die Ausgleichsmassen bestehen aus Teilmassen, die sich an mit den Wellen sich drehenden Scheiben befinden, die mittels eines Verschiebemechanismus entlang einer kreisförmigen Bahn relativ zueinander verschiebbar sind. Damit läßt sich der aus dem Verschieben resultierende Schwerpunkt der Ausgleichsmassen einstellen, d.h. die Exzentrizität der Ausgleichsmassen zur Drehachse. Der Verschiebemechanismus dient dem gleichzeitigen Verstellen des Schwerpunktes der Ausgleichsmassen in die Lage, die bei dem eingestellten Hub der Schüttelbewegung vorteilhaft ist.

Es ist Aufgabe der Erfindung, einen derartigen Schüttelbock zu schaffen, der insbesondere im Hinblick auf die Verstellung des Massenkraftausgleichssystems so aufgebaut ist, daß eine möglichst einfache Verstellung möglich ist. Außerdem soll erfindungsgemäß ein kompakter Aufbau realisiert werden.

Diese Aufgabe wird erfindungsgemäß durch die Merkmale sowohl des Anspruchs 1 als auch des Anspruchs 2 gelöst.

Diese Ausgestaltung der angetriebenen Wellen und der Verstelleinrichtung erlaubt einen kompakten Aufbau und eine einfache Verstellung der Ausgleichsmassen im Verhältnis zur Massenbewegung.

Zweckmäßigerweise ist die Verstellstange mit einem Stellmotor, insbesondere einer hydraulischen oder pneumatischen Verstelleinrichtung verbunden. Wenn die Verstellstange drehfest, aber axial relativ bewegbar mit der anderen, inneren Hohlwelle verbunden ist, so befindet sich zwischen der Verstellstange und der Verstelleinrichtung ein Lager, das eine Relativdrehung zwischen diesen beiden Teilen erlaubt. Dadurch kann durch eine pneumatische oder hydraulische Hin- und Herbewegung eine einfache Verstellung der Verstellstange erfolgen, auch wenn diese sich mit den sich drehenden Teilen mitdreht.

Die Verstellstange kann über zwei im Axialabstand angeordnete Querstifte mit der anderen, inneren Hohlwelle verbunden sein, die beidseitis in Längsschlitzen dieser Hohlwelle geführt sind. Einer der Querstifte ist über ein Lager mit einem Nockenfolgeglied verbunden, so daß eine Relativdrehung zwischen dem Querstift und dem Nockenfolgeglied möglich ist. Das Nockenfolgeglied greift in einer Ausnehmung der einen, äußeren Hohlwelle und eines Abschnitts der Ausgleichsmassen ein, wobei eine Ausnehmung eine in Axialrichtung der Verstellstange verlaufende Längsausnehmung und die andere eine davon abweichend gekrümmt oder schräg verlaufende Nockenbahn ist. Der andere Querstift ist fest mit einem Nockenfolgeglied verbunden, das in eine Ausnehmung eines Abschnitts der anderen Ausgleichsmassen eingreift, wobei der zugehörige Längsschlitz der anderen, inneren Hohlwelle oder die Ausnehmung im Abschnitt des anderen Massenausgleichsgewichtes als gekrümmt oder schräg verlaufende Nockenbahn ausgebildet ist. Dabei verläuft dann das andere in Axialrichtung der Verstellstange. Dies bedeutet, daß jeweils in einer Ausnehmung eine Führung und in der anderen eine Nockensteuerung zur Verstellung der Winkellage der Ausgleichsmassen erfolgt.

Somit ist eine Verstellung der Ausgleichsmassen von einer zentralen Axialstelle aus möglich, obwohl sich die innere und äußere Hohlwelle in entgegengesetzter Drehrichtung drehen.

Die Ausnehmung in der einen, äußeren Hohlwelle ist als in Axialrichtung der Verstellstange verlaufender Längsschlitz ausgebildet, in dem ein mit dem Nockenfolgeglied verbundenes Führungselement gleitet. Der Längsschlitz ist in der anderen, inneren Hohlwelle in Axialrichtung der Verstellstange verlaufend angeordnet, wobei in diesem Längsschnitt ein mit dem Nockenfolgeglied verbundenes Führungselement gleitet.

Die Tragelemente der Ausgleichsmassen können aus zumindest zweiteligen Teilscheiben bestehen, die sich jeweils über ein Lager auf der anderen, inneren Hohlwelle abstützen. Dies bedeutet, daß die Teile der Teilscheiben relativ zueinander verstellt werden können, wobei an jedem Teil sich eine Teilmasse befindet. Dies ist eine besonders einfache Verstellmöglichkeit der Winkellage der Ausgleichsmassen und somit der Auswirkung der Ausgleichsmassen im Verhältnis zur durchgeführten Schüttelbewegung (Exzentereinstellung).

Vorzugsweise und insbesondere in Verbindung mit den zweiteiligen Teilscheiben sind beidseits der Querstifte Nockenfolgeglieder angeordnet, die jeweils einer die Ausgleichsmassen tragenden Teilcheibe zugeordnet sind.

Vorzugsweise ist die Verstelleinrichtung für die Ausgleichsmassen auch mit der Exzentereinrichtung gekoppelt, wobei zumindest ein Teil der die Ausgleichsmassen tragenden einen Teilscheibe mit der Exzentereinrichtung verbunden ist. Dadurch ist es möglich, mit einem Verstellvorgang die die Schüttelbewegung bestimmende Exzenterbewegung und gekoppelt damit die Auswirkung der Ausgleichsmassen zu verstellen.

Vorzugsweise besteht die Exzentereinrichtung aus zwei koaxialen Exzenterelementen. Wenn dies der Fall ist, so kann jedes Exzenterelement mit jeweils einem Teil der eine Teilmasse tragenden Teilcheibe verbunden sein.

Um während des Betriebes eine selbsttätige Verstellung der Winkellage der Exzentergewichte und auch der Exzentereinrichtung zu vermeiden, wirkt die Verstelleinrichtung mit einer lösbaren Kupplung zusammen. Dabei kann zumindest ein Tragelement der Ausgleichsmassen über die Kupplung, die für die Verstellung gelöst wird, mit der anderen, inneren Hohlwelle verbunden sein

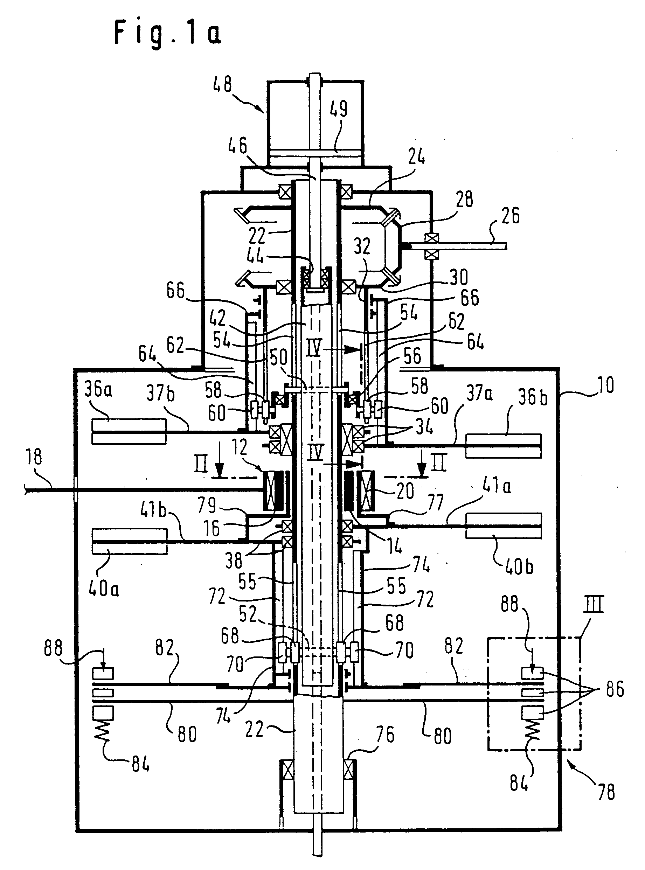

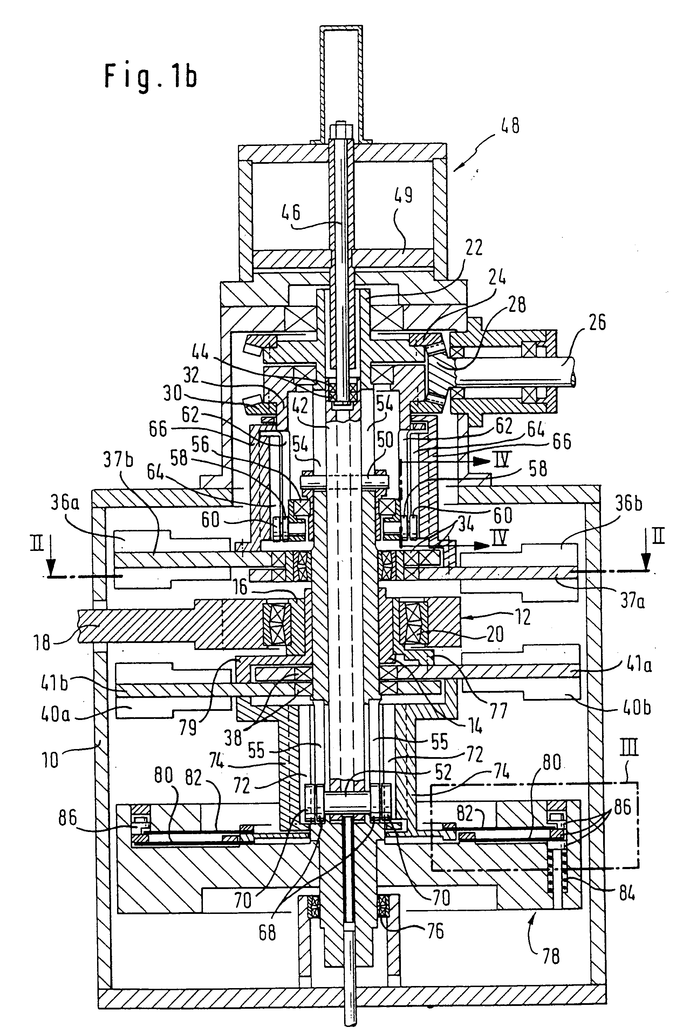

Die Erfindung wird nachfolgend anhand eines in den beigefügten Zeichnungen rein schematisch dargestellten Ausführungsbeispieles näher erläutert.
- Fig. 1a: zeigt ein Prinzip-Funktionsschema eines Schüttelbocks gemäß der Erfindung,
- Fig. 1b: eine etwas detailliertere Längsschnittansicht eines Schüttelbocks gemäß Fig. 1a,
- Fig. 2: eine Schnittansicht entlang der Linie II-II in Fig. 1a durch die Exzentereinrichtung und die Schüttelstange,
- Fig. 3: eine Schnittansicht einer Kupplungseinrichtung gemäß Ziffer III in Fig. 1a und 1b,
- Fig. 4: eine Darstellung der Nockensteuerung entsprechend der Schnittanordnung IV-IV in Fig. 1a und 1b.
- Fig. 5a+5b: jeweils eine Prinzip-Funktionsskizze der Ausführungsform gemäß Anspruch 6 in zwei um 90° versetzten Teil-Seitenansichten
Der Schüttelbock gemäß Fig. 1a und 1b weist ein Getriebegehäuse 10 auf. In diesem Getriebegehäuse 10 befindet sich eine Exzentereinrichtung 12 mit einem inneren Exzenter 14 und einem äußeren Exzenter 16, die koaxial angeordnet und gegeneinander winkelverstellt werden können. Zwischen dem äußeren Exzenter 16 und einer Schüttelstange 18 befindet sich ein Wälzlager 20. Der innere Exzenter 14 sitzt auf einer inneren Hohlwelle 22, die über ein Kegelzahnrad 24 durch eine Antriebswelle 26 und ein Antriebskegelrad 28 in eine Richtung gedreht wird.

Die Antriebswelle 26 dreht über das Kegelrad 28 und ein weiteres Kegelrad 30 eine äußere Hohlwelle 32 in die andere Richtung. Über Wälzlager 34 stützen sich als Tragelemente von Teilmassen 36a und 36b zwei Teilscheiben 37a und 37b auf der inneren Hohlwelle 22 ab, wobei, wie dies später noch beschrieben wird, diese beiden Scheiben 37a, 37b relativ zueinander verdrehbar sind, um die Winkellage der Teilmasse 36a bzw. 36b in eine gewünschte Position zu bringen.

In gleicher Weise sitzen auf der inneren Hohlwelle 22 im axialen Abstand zu den Wälzlagern 34 über Wälzlager 38 Ausgleichsgewichte 40b und 40a tragende Teilscheiben 41a und 41b.

Innerhalb der inneren Hohlwelle 22 befindet sich eine Verstellstange 42, die über Wälzlager 44 mit einer Kolbenstange 46 eines pneumatischen oder hydraulischen Zylinders 48 verbunden ist, dessen Kolben das Bezugszeichen 49 trägt. Die Kolbenstange 46 vollzieht während der Hubverstellung eine hin- und hergehende Bewegung, erlaubt jedoch eine Relativdrehung der Verstellstange 42.

Die Verstellstange 42 ist im axialen Abstand mit einem proximalen Querstift 50 und einem distalen Querstift 52 versehen, der dadurch eine drehfeste Verbindung zwischen der Verstellstange 42 und der inneren Hohlwelle 22 schafft. Diese Querstifte 50 und 52 ragen mit beiden Enden in Längsschlitze 54, 55, in denen die Querstifte für eine Axialbewegung, d.h. axial zur Längsachse der Verstellstange in der inneren Hohlwelle 22 verschiebbar geführt sind. Eine derartige Bewegung ist möglich, wenn am Verstellmotor, z.B. ein hydraulisch oder pneumatisch beaufschlagter Kolben 49 betätigt wird.

Der proximale Querstift 50 ist über ein Wälzlager 56 auf zwei Seiten jeweils mit einer Doppelrollenanordnung versehen, von denen eine Rolle eine Führungs- und Stützrolle 58 und die andere eine Schlitzfolgerolle 60 ist. Die Führungs- und Stützrollen 58 laufen in Längsschlitzen 62, die in Axialrichtung der Achse der Verstellstange 42 verlaufen, ebenso wie die Schlitze 54 und die Schlitze 55. Die Folgerollen 60 laufen in schräggestellten Schlitzen 64, die in gekrümmten Übertragungselementen 66 ausgebildet sind. Diese gekrümmten Übertragungselemente 66 stehen jeweils in fester Verbindung mit einer Teilscheibe 37a bzw. 37b. Es besteht allerdings auch die Möglichkeit, den Längsschlitz 62 als gekrümmt oder schräg verlaufenden Schlitz auszubilden, so daß dann die Rolle 58 eine Schlitzfolgerolle wäre. Dementsprechend wäre dann in dem gekrümmten Übertragungselement 66 ein axial verlaufender Stützschlitz ausgebildet.

Entsprechend weist der distale Querstift beidseits jeweils eine in dem Längsschlitz 55 verlaufende Führungs- und Stützrolle 68 und eine Schlitzfolgerolle 70 auf, die jeweils in einem Schlitz 72 eines gekrümmten Übertragungselementes 74 angeordnet ist. Dieses Übertragungselement 74 ist jeweils mit einer Teilscheibe 41a, 41b verbunden. Auch hier könnte ein Umtausch dahingehend vorgenommen werden, daß die Längsschlitze 55 als schräg gestellte Schlitze ausgebildet sind.

Die Teilscheiben 41a und 41b sind jeweils über ein Verbindungselement 77 bzw. 79 mit dem äußeren Exzenter 16 bzw. mit dem inneren Exzenter 14 verbunden, so daß eine Verstellung der Teilscheibe zugleich eine Verstellung des zugehörigen Exzenters zur Folge hat.

Die innere Hohlwelle 22 ist am distalen Ende, d.h. dem dem Antrieb abgewandten Ende, in einem weiteren Stützlager 76 abgestützt. In diesem Bereich befindet sich auch eine Kupplungseinrichtung 78. Diese Kupplung wird von einer mit der inneren Hohlwelle 22 verbundenen Kupplungsscheibe 80 und einer mit dem gekrümmten Übertragungselement 74 versehenen Kupplungsscheibe 82 gebildet. Mittels einer Feder 84 und Kupplungselementen 86 werden die Kupplungsscheiben 82 und 80 eingeklemmt. In diesem eingeklemmten Zustand wird die Relativstellung zwischen den Teilscheiben 37a, 37b bzw. 41a und 41b aufrechterhalten, auch wenn die Gesamtanordnung in Betrieb ist. Für den Hubverstellvorgang erfolgt ein Lösen der Kupplung entsprechend der Pfeilrichtung 88 in Fig. 1a, in welchem Zustand die Kupplung gelöst ist und eine Verstellung der Teilscheiben und somit der Ausgleichsgewichte relativ zueinander zuläßt.

Wenn, wie zuvor beschrieben, die Kupplung 78 gelöst ist, so kann durch Verschieben des Kolbens 49 und somit der Kolbenstange 46 eine Axialverstellung der Verstellstange 42 vorgenommen werden. Dabei gleiten die Querstifte 50 und 52 in den Schlitzen 54 und 55 der inneren Hohlwelle 22. Dabei bewegt sich die Führungs- und Stützrolle 58 in den Schlitzen 62 und das Schlitzfolgeglied 60 in dem Schlitz 64 mit der Folge, daß die Teilscheiben 37a und 37b winkelmäßig zueinander gedreht und versetzt werden, so daß die Ausgleichsmassen 36a und 36b eine andere Relativstellung zueinander einnehmen. In gleicher Weise erfolgt eine ähnliche Verstellung über das Schlitzfolgeglied 70 für die Teilscheiben 41a und 41b, wobei zugleich über die Verbindungselemente 77 und 79 eine Verstellung der Exzentrizität erfolgt. Wenn so die gewünschte Einstellung der Ausgleichsmassen und der Exzentrizität für die gewollte Schüttelbewegung vorgenommen worden ist, wird die Kupplung 78 geschlossen, damit während des Schüttelbetriebes keine Verstellung der eingestellten Stellung selbsttätig erfolgen kann.

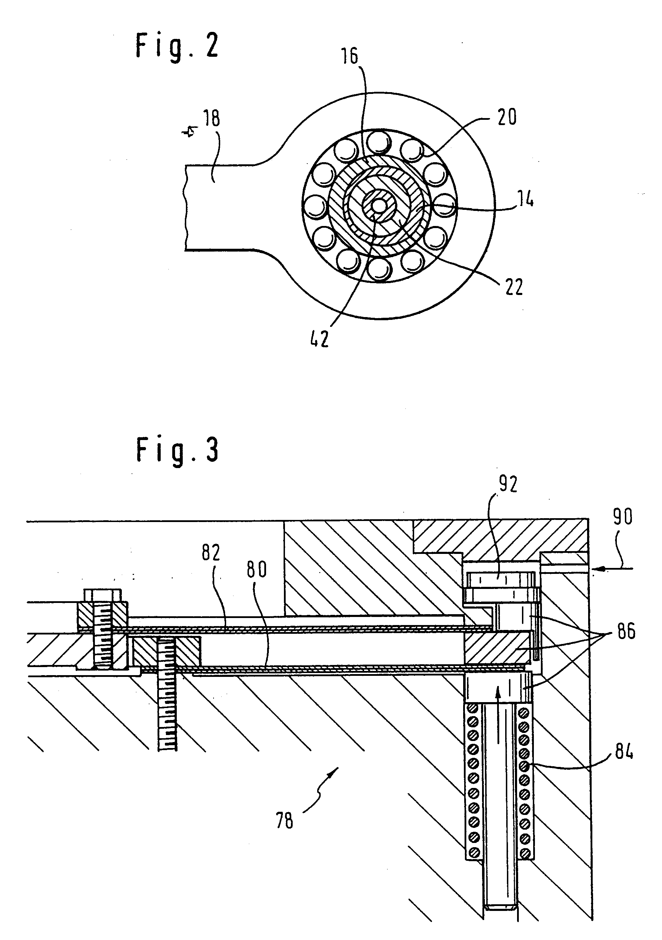

Aus Fig. 3 ist mehr im einzelnen die Kupplungseinrichtung 78 erkennbar. Der Pfeil 90 deutet an, daß das hydraulische oder pneumatische Arbeitsmittel dazu verwendet werden kann, die durch die Feder 84 geschlossene Kupplung bzw. Bremseinrichtung zu öffnen, wenn die Druckluft auf einen Kolben 92 wirkt.

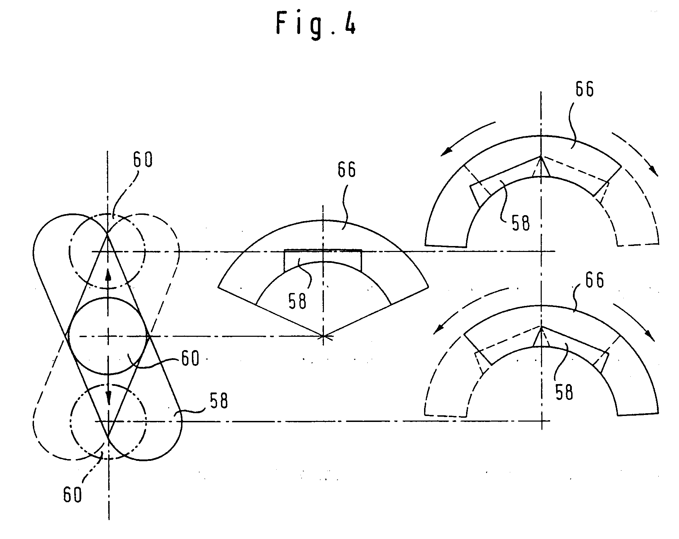

Fig. 4 zeigt das Prinzip einer Nockensteuerung in Form der Schlitzfolgerolle 60 und des schräggestellten Schlitzes 58 im linken Teil der Fig. 4. Dort ist die Schrägstellung des Schlitzes 58 dargestellt, und zwar in ausgezogenen Linien für die eine Teilscheibe und in unterbrochenen Linien für die andere Teilscheibe, wobei in strichpunktierten und strich-zwei-punktierten Linien die jeweiligen Endlagen der Schlitzfolgerolle 60 bei der Bewegung in der einen und in der anderen Richtung dargestellt sind, und zwar je nachdem, ob die Verstellstange in der einen oder in der anderen Richtung axial verschoben wird. In der Mitte der Darstellung ist das gekrümmte Übertragungselement 66 in der Mittelstellung dargestellt. In der rechten Darstellung jeweils in den Endstellungen.

Die in Fig. 4 dargestellte mittlere Stellung ist als die normale Stellung anzusehen, in der die Teilmassen sich gerade gegenüberstehen und dadurch die Kompensation unwirksam ist.

Die Kupplung kann als Schwungscheibe ausgebildet sein. Außerdem ist ein nicht dargestellter Sensor vorgesehen, der die Vibrationen registriert und der bei Vibrationen unzulässiger Stärke ein Signal abgibt, durch den ein schneller Stillstand des Schüttelbockes herbeigeführt werden kann.

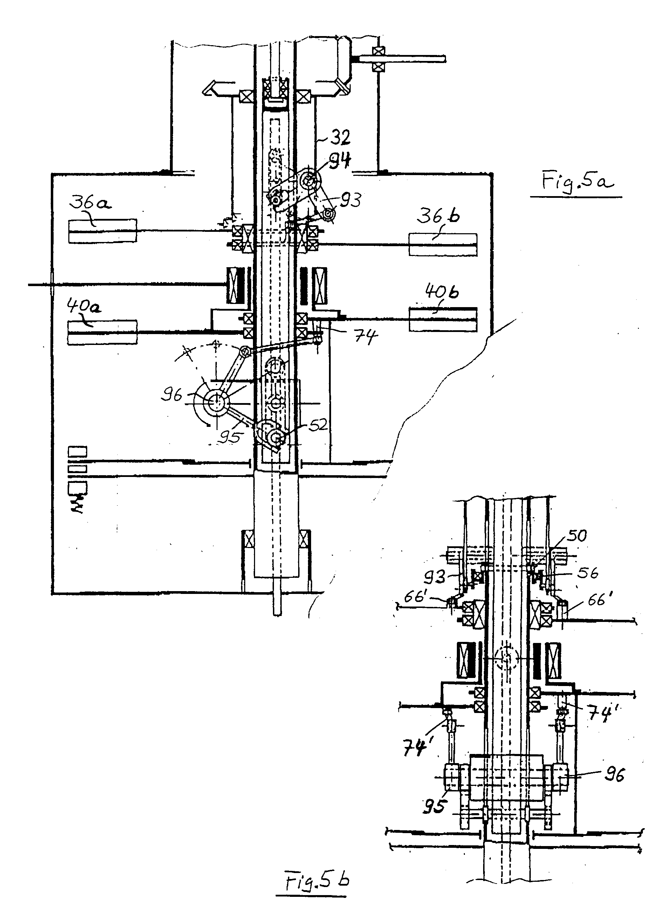

Wie in Fig. 5a und 5b gezeigt, kann die zuvor beschriebene Nockensteuerung für die Verstellung der Gewichte ersetzt werden durch eine Hebelsteuerung. Hierzu ist einer (50) der Querstifte über das Lager 56 (Relativdrehbewegung) mit einem Winkelhebel 93 verbunden, dessen Drehpunkt 94 auf der äußeren Hohlwelle 32 fixiert ist, welcher Winkelhebel die auf einen Schenkel übertragene Axialbewegung der Verstellstange in eine am anderen Schenkel abgegebene im wesentlichen Umfangsbewegung umsetzt, wobei diese Umfangsbewegung auf die Abschnitte 66' der Ausgleichsmassen 36a bzw. 36b übertragen wird. Der andere Querstift 52 kann mit einem anderen Winkelhebel 95 verbunden sein, dessen Drehpunkt 96 in axialer Richtung fixiert ist. Dieser Winkelhebel setzt die auf einen Schenkel übertragene Axialbewegung der Verstellstange in eine am anderen Schenkel abgegebene im wesentlichen Umfangsbewegung um. Diese Umfangsbewegung wird auf die Abschnitte 74' der anderen Ausgleichsmasse 40a bzw. 40b übertragen.

## Patentansprüche

1. Schüttelbock zum Versetzen einer Masse in eine eindimensionale, hin- und hergehende Zwangsbewegung, mit einer Einrichtung zum Kompensieren der von der Masse erzeugten Trägheitskraft, die zwei Paare von je gleich großen Ausgleichsmassen (36a, 36b; 40a, 40b) umfaßt, wobei die Ausgleichsmassen (36a, 36b; 40a, 40b) für sich und für ihr Zusammenwirken hinsichtlich ihrer Wirkstellung lageveränderbar und in zueinander entgegengesetztem Drehsinn um eine Drehachse so drehbar sind, daß ihre Schwerpunkte zum Umkehrzeitpunkt der Masse bezüglich der Drehachse in die entgegengesetzte Richtung zu der in diesem Zeitpunkt zu kompensierenden Massenkraft weisen, wobei ihre Exzentrizität und ihre Masse so bemessen werden, daß ihre beim Drehen wirkenden Fliehkräfte die von der eindimensional hin- und herbewegten Masse herrührenden Trägheitskräfte im wesentlichen kompensieren, wobei die Ausgleichsmassen (36a, 36b; 40a, 40b) jeweils auf koaxial angeordneten, in zueinander entgegengesetztem Drehsinn angetriebenen Wellen angeordnet sind, von denen eine eine Hohlwelle ist, durch die über eine Exzentereinrichtung (12) die Masse bewegt wird, **dadurch gekennzeichnet,** daß auch die andere Welle als Hohlwelle (22) ausgebildet ist, in der koaxial eine Verstellstange (42) angeordnet ist, die über eine Steuerung (50, 58, 60, 64; 52, 70, 72) mit den von Tragelementen (37a, 37b; 41a, 41b) gehaltenen Ausgleichsmassen (36a, 36b; 40a, 40b) und/oder der Exzentereinrichtung (12) verstelltechnisch verbunden ist und daß die Verstellstange (42) über zwei im Axialabstand angeordnete Querstifte (50, 52) mit der anderen, inneren Hohlwelle (22) verbunden ist, die jeweils beidseits in Längsschlitzen (54, 55) dieser Hohlwelle geführt sind, daß einer (50) der Querstifte über ein Lager (56), das zwischen dem einen Querstift (50) und der einen, äußeren Hohlwelle (32) eine Relativdrehbewegung erlaubt, in eine Ausnehmung (62, 64) der einen, äußeren Hohlwelle (32) und eines Abschnitts (66) der einen beiden Ausgleichsmassen (36a, 36b) eingreift, wobei eine Ausnehmung (62) eine in Axialrichtung der Verstellstange (42) verlaufende Längsausnehmung und die andere (64) eine davon abweichend gekrümmt oder schräg verlaufende Nockenbahn ist, und daß der andere Querstift (52) mit einem Nockenfolgeglied (70) verbunden ist, das in eine Ausnehmung (72) je eines Abschnitts (74) der anderen beiden Ausgleichsmassen (40a, 40b) eingreift, wobei der zugehörige Längsschlitz (55) der anderen, inneren Hohlwelle (22) oder die Ausnehmung (72) im Abschnitt der anderen Ausgleichsmassen als gekrümmt oder schräg verlaufende Nockenbahn (72) ausgebildet ist und der Längsschlitz in der Ausnehmung im Abschnitt der anderen Ausgleichsmassen (40a, 40b) oder der Längsschlitz in der anderen inneren Hohlwelle (22) in Axialrichtung der Verstellstange verläuft.

2. Schüttelbock zum Versetzen einer Masse in eine eindimensionale, hin- und hergehende Zwangsbewegung, mit einer Einrichtung zum Kompensieren der von der Masse erzeugten Trägheitskraft, die zwei Paare von je gleich großen Ausgleichsmassen (36a, 36b; 40a, 40b) umfaßt, wobei die Ausgleichsmassen (36a, 36b; 40a, 40b) für sich und für ihr Zusammenwirken hinsichtlich ihrer Wirkstellung lageveränderbar und in zueinander entgegengesetztem Drehsinn um eine Drehachse so drehbar sind, daß ihre Schwerpunkte zum Umkehrzeitpunkt der Masse bezüglich der Drehachse in die entgegengesetzte Richtung zu der in diesem Zeitpunkt zu kompensierenden Massenkraft weisen, wobei ihre Exzentrizität und ihre Masse so bemessen werden, daß ihre beim Drehen wirkenden Fliehkräfte die von der eindimensional hin- und herbewegten Masse herrührenden Trägheitskräfte im wesentlichen kompensieren, wobei die Ausgleichsmassen (36a, 36b; 40a, 40b) jeweils auf koaxial angeordneten, in zueinander entgegengesetztem Drehsinn angetriebenen Wellen angeordnet sind, von denen eine eine Hohlwelle ist, durch die über eine Exzentereinrichtung (12) die Masse bewegt wird, **dadurch gekennzeichnet,** daß auch die andere Welle als Hohlwelle ausgebildet ist, in der koaxial eine Verstellstange angeordnet ist, die über eine Steuerung mit dem von Tragelementen gehaltenen Ausgleichsmassen (36a, 36b; 40a, 40b) und/oder der Exzentereinrichtung verstelltechnisch verbunden ist und daß die Verstellstange über zwei im Axialabstand angeordnete Querstifte (50, 52) mit der anderen, inneren Hohlwelle verbunden ist, die jeweils beidseits in Längsschlitzen (54, 55) dieser Hohlwelle geführt sind, daß einer (50) der Querstifte über ein Lager (56), das zwischen dem einen Querstift (50) und der einen, äußeren Hohlwelle (32) eine Relativdrehbewegung erlaubt, mit einem Winkelhebel (93) verbunden ist, dessen Drehpunkt auf der äußeren Hohlwelle (32) fixiert ist , welcher Winkelhebel (93) die auf einen Schenkel übertragene Axialbewegung der Verstellstange in eine am anderen Schenkel abgegebene im wesentlichen Umfangsbewegung umsetzt, und daß diese Umfangsbewegung auf Abschnitte (66') der einen beiden Ausgleichsmassen (36a, 36b) übertragen wird, und daß der andere Querstift (52) mit einem anderen Winkelhebel (95) verbunden ist, dessen Drehpunkt axial fixiert ist , welcher Winkelhebel die auf einen Schenkel übertragene Axialbewegung der Verstellstange in eine am anderen Schenkel abgegebene im wesentlichen Umfangsbewegung umsetzt, und daß diese Umfangsbewegung auf die jeweiligen Abschnitte (74') der anderen beiden Ausgleichsmassen (40a, 40b) übertragen wird.

3. Schüttelbock nach Anspruch 1 oder 2, **dadurch gekennzeichnet,** daß die Verstellstange (42) mit einem Verstellmotor, insbesondere einer hydraulischen oder pneumatischen Verstelleinrichtung (48) verbunden ist.

4. Schüttelbock nach einem der Ansprüche 1 bis 3, **dadurch gekennzeichnet,** daß die Tragelemente der Ausgleichsmassen aus zumindest zweiteiligen Teilscheiben (37a, 37b; 41a, 41b) bestehen, die sich jeweils über ein Lager (34; 38) auf der anderen, inneren Hohlwelle (22) abstützen.

5. Schüttelbock nach einem der Ansprüche 1, 3 oder 4, **dadurch gekennzeichnet,** daß beidseits der Querstifte (50, 52) Nockenfolgeglieder (60,70) angeordnet sind, die jeweils einer die Ausgleichsmassen tragenden Teilscheibe (37a, 37b; 41a, 41b) zugeordnet sind.

6. Schüttelbock nach Anspruch 4 oder 5, **dadurch gekennzeichnet,** daß zumindest eine Ausgleichsmassen (40a, 40b) tragende Teilscheibe (41a, 41b) mit der Exzentereinrichtung (12) verbunden ist.

7. Schüttelbock nach Anspruch 6, **dadurch gekennzeichnet,** daß die Exzentereinrichtung (12) aus zwei koaxialen Exzenterelementen (14, 16) besteht, und daß jedes Exzenterelement (14, 16) mit jeweils einer Teilscheibe (41a, 41b) verbunden ist.

8. Schüttelbock nach einem der Ansprüche 1 bis 7, **dadurch gekennzeichnet,** daß eine die Verstellstange (42) beaufschlagende Verstelleinrichtung (48) mit einer lösbaren Kupplung (78) zusammenwirkt.

9. Schüttelbock nach Anspruch 8, **dadurch gekennzeichnet,** daß zumindest ein Tragelement der Ausgleichsmassen über die Kupplung (78), die für die Verstellung gelöst wird, mit der anderen, inneren Hohlwelle (22) verbunden ist.

10. Schüttelbock nach Anspruch 8 oder 9, **dadurch gekennzeichnet,** daß die Kupplung als Schwungscheibe ausgebildet ist.

11. Schüttelbock nach einem der Ansprüche 1 bis 10, **dadurch gekennzeichnet,** daß ein Vibrationen registrierender Sensor angebracht ist, der bei wegen ihrer Stärke unzulässigen Vibrationen ein Signal abgibt, das einen schnellen Stillstand des Schüttelbockes herbeiführt.

## Claims

1. Agitation support-frame for shifting a body in a one-dimensional forward and reverse shaking movement, with a device for balancing the inertia produced by a said body which encloses two pairs of equally-sized balancing bodies (36a, 36b; 40a, 40b), whereby said balancing bodies (36a, 36b; 40a, 40b) can rotate for their separate and combined action, about an axis of rotation in opposite directions to each other and such that their position can vary in relation to their position of functioning, such that their fulcral points, at an instant of reversal of motion, in relation to a said axis of rotation, of a said body, tend in an opposite direction to a mass force to be balanced at this said instant, whereby their eccentricity and their mass is proportioned such that their centrifugal forces which act during rotation substantially balance inertia forces of a said body moved in a one-dimensional forward and reverse motion, whereby said balancing bodies (36a, 36b; 40a, 40b) are each disposed on coaxially arranged shafts which are driven in directions of rotation which are opposite to each other, one of these said shafts being a hollow shaft by means of which a said body is moved by means of a decentering device, **wherein** another shaft (22) is also developed as a hollow shaft in which a displacement bar (42), which is connected in terms of displacement mechanics, by means of a guide member (50, 58, 60, 64; 52, 70, 72), to balancing bodies (36a, 36b; 40a, 40b), which are held by support elements (37a, 37b; 41a, 41b), and/or a decentering device (12), is coaxially disposed, and a said displacement bar (42) is connected to the said other, internal hollow shaft (22) by means of two cross-pins (50, 52) which are disposed separated axially, said cross-pins (50, 52) each being guided on both sides in lengthwise slots (54, 55) of this said hollow shaft, and one of said cross-pins (50) engages in a clearance (62, 64) of an outer hollow shaft (32) and a section (66) of two balancing bodies (36a, 36b) by means of a support-bearing (56) which enables relative rotational movement between one cross-pin (50) and an outer, hollow shaft (32), whereby one clearance (62) is a longitudinal recess running in the axial direction of a said displacement bar (42) and another different clearance (64) is a curved or inclined cam guide, and another cross-pin (52) is connected to a cam-tracking member (70) which engages in a clearance (72) of a section (74) of another two balancing bodies (40a, 40b), whereby an associated lengthwise slot (55) of a further, internal hollow shaft (22) or a clearance in a section of other balancing bodies is developed as a curved or inclined cam-tracking member (72) and a lengthwise slot in a recess in a section of other balancing bodies (40a, 40b) or a lengthwise slot in another, internal hollow shaft (22) runs in an axial direction of a displacement bar.

2. Agitation support-frame for shifting a body in a one-dimensional forward and reverse shaking movement, with a device for balancing the inertia produced by a said body which encloses two pairs of equally-sized balancing bodies (36a, 36b; 40a, 40b), whereby said balancing bodies (36a, 36b; 40a, 40b) can rotate for their separate and combined action, about an axis of rotation in opposite directions to each other and such that their position can vary in relation to their position of functioning, such that their fulcral points, at an instant of reversal of motion, in relation to a said axis of rotation, of a said body, tend in an opposite direction to a mass force to be balanced at this said instant, whereby their eccentricity and their mass is proportioned such that their centrifugal forces which act during rotation substantially balance inertia forces of a said body moved in a one-dimensional forward and reverse motion, whereby said balancing bodies (36a, 36b; 40a, 40b) are each disposed on coaxially arranged shafts which are driven in directions of rotation which are opposite to each other, one of these said shafts being a hollow shaft by means of which a said body is moved by means of a decentering device, **wherein** another shaft is also developed as a hollow shaft in which a displacement bar, which is connected in terms of displacement mechanics, by means of a guide member (50, 58, 60, 64; 52, 70, 72), to balancing bodies (36a, 36b; 40a, 40b), which are held by support elements, and/or a decentering device, is coaxially disposed, and a said displacement bar is connected to the said other, internal hollow shaft by means of two cross-pins (50, 52) which are disposed separated axially, said cross-pins (50, 52) each being guided on both sides in lengthwise slots (54, 55) of this said hollow shaft, and one of said cross-pins (50) is connected to an angle-lever (93), the centre of rotation of which is fixed onto an outer hollow shaft (32), by means of a support-bearing (56) which enables relative rotational movement between one said cross-pin (50) and an outer, hollow shaft (32), a said angle-lever (93) converting an axial movement of a said displacement bar which is transmitted onto an arm into a essentially peripheral movement given to another arm, and this peripheral movement is transmitted onto sections (66') of two balancing bodies (36a, 36b), and another cross-pin (52) is connected to another angle-lever (95) for which a pivoting point is axially fixed, a latter said angle-lever converting axial movement of a said displacement bar that is transmitted onto one arm into an essentially peripheral movement which is transmitted onto the other arm, and this peripheral movement is transferred onto relevant sections (74') of another two balancing bodies (40a, 40b).

3. Agitation support-frame in accordance with claim 1 or 2, **wherein** a displacement bar (42) is connected with a displacement means, an hydraulic or pneumatic displacement device (48) in particular.

4. Agitation support-frame in accordance with any one of claims 1 to 3, **wherein** support elements of balancing bodies comprise at least disc-plate sections (37a, 37b; 41a, 41b), having two-parts, which are each supported on another, internal hollow shaft (22) by means of a support-bearing (34; 38).

5. Agitation support-frame in accordance with any one of claims 1 to 3 or 4, wherein cam-uptake members, which are each associated with one of disc-plate sections (37a, 37b; 41a, 41b) which support balancing bodies (40a, 40b), are disposed on both sides of cross-pins (50, 52).

6. Agitation support-frame in accordance with claim 4 or claim 5, **wherein**, at least one disc-plate section (41a, 41b) which supports balancing bodies (40a, 40b) is connected with a decentering device (12).

7. Agitation support-frame in accordance with claim 6, **wherein** a decentering device (12) comprises two coaxial decentering elements (14, 16) and each decentering element (14, 16) is connected to one disc-plate section (41a, 41b).

8. Agitation support-frame in accordance with any one of claims 1 to 7, **wherein** a displacement device (48) which is applied to a displacement bar (42) acts together with releasable coupling (78).

9. Agitation support-frame in accordance with claim 8, **wherein** at least one support element for balancing bodies is connected with another, internal hollow shaft (22) by means of coupling (78) which is released for displacement.

10. Agitation support-frame in accordance with claim 8 or 9, **wherein** coupling is developed as a driven plate.

11. Agitation support-frame in accordance with any one of claims 1 to 10, **wherein** a sensor which registers vibrations and gives out a signal as a result of vibrations of an unpermissible magnitude, is applied, a said signal leading to a said agitation support-frame quickly coming to a standstill.

## Revendications

1. Vibrateur pour déplacer une masse selon un mouvement forcé de va-et-vient unidimensionnel, avec un dispositif pour compenser la force d'inertie produite par la masse, comportant deux paires de masses compensatrices (36a, 36b; 40a, 40b) ayant deux à deux la même grandeur, les masses compensatrices (36a, 36b; 40a, 40b) pouvant, individuellement et collectivement, être changées de position en ce qui concerne leur position d'action, et étant rotatives en sens contraires autour d'un axe de rotation de telle sorte que leurs centres de gravité soient orientés, à l'instant d'inversion du mouvement de la masse, en sens opposé, par rapport à l'axe de rotation, à la force massique à compenser à cet instant, tandis que leur excentricité et leur masse sont déterminées de telle sorte que leurs forces centrifuges agissant lors de leur rotation compensent essentiellement les forces d'inertie provenant de la masse en mouvement alternatif unidimensionnel, les masses compensatrices (36a, 36b; 40a, 40b) étant disposées respectivement sur des arbres coaxiaux entraînés en sens contraires, dont l'un est un arbre creux par lequel la masse est mise en mouvement par l'intermédiaire d'un dispositif excentrique (12),
**caractérisé** en ce que l'autre arbre est également sous la forme d'un arbre creux (22) dans lequel est disposée coaxialement une tige de réglage (42) qui est reliée par un mécanisme de commande (50, 58, 60, 64; 52, 70, 72) aux masses compensatrices (36a, 36b; 40a, 40b) tenues par des éléments porteurs (37a, 37b; 41a, 41b) et/ou au dispositif excentrique (12), du point de vue de la technique de réglage, et en ce que la tige de réglage (42) est reliée par deux broches transversales (50, 52) espacées axialement à l'autre arbre creux, l'arbre intérieur (22), ces broches étant guidées respectivement de part et d'autre dans des fentes longitudinales (54, 53) de cet arbre creux; en ce qu'une des broches, la broche (50) s'engage, par l'intermédiaire d'un palier (56) qui permet un mouvement de rotation relatif entre cette broche (50) et l'arbre creux extérieur (32), dans un évidement (62, 64) de l'arbre creux extérieur (32) et d'un secteur (66) d'une des deux masses compensatrices (36a, 36b), un des évidements (62) étant un évidement longitudinal s'étendant dans le sens axial de la tige de commande (42) et l'autre (64) étant une rampe à came se détachant de celui-ci, de forme incurvée ou oblique, et en ce que l'autre broche (52) est reliée à un organe suiveur de came (70) qui s'engage dans un évidement recpectif (72) dans un secteur (74) de l'autre des deux masses compensatrices (40a, 40b), la fente longitudinale associée (55) de l'autre arbre creux, l'arbre intérieur (22), ou l'évidement (72) dans le secteur de l'autre masse compensatrice est sous la forme d'une rampe à came (72) courbe ou disposée en oblique, et la fente longitudinale dans l'évidement dans le secteur de l'autre masse compensatrice (40a, 40b) ou la lente longitudinale dans l'autre arbre creux intérieur (22) s'étend dans le sens axial de la tige de commande.

2. Vibrateur pour entraîner une masse en un mouvement alternatif forcé unidimensionnel, avec un dispositif pour compenser la force d'inertie produite par la masse, comportant deux paires de masses compensatrices (36a, 36b; 40a, 40b) ayant deux à deux la même grandeur, les masses compensatrices (36a, 36b; 40a, 40b) pouvant, individuellement et collectivement, être déplacées en ce qui concerne leur position d'action, et étant rotatives en sens contraires autour d'un axe de rotation de telle sorte que leurs centres de gravité soient orientés, à l'instant d'inversion du mouvement de la masse,en sens opposé, par rapport à l'axe de rotation, à la force massique à compenser à cet instant, tandis que leur excentricité et leur masse sont déterminées de telle sorte que leurs forces centrifuges agissant lors de leur rotation compensent essentiellement les forces d'inertie provenant de la masse en mouvement alternatif unidimensionnel, les masses compensatrices (36a, 36b; 40a, 40b) étant disposées respectivement sur des arbres coaxiaux entraînés en sens contraires, dont l'un est un arbre creux par lequel la masse est mise en mouvement par l'intermédiaire d'un dispositif excentrique (12),
**caractérisé** en ce que l'autre arbre est également sous la forme d'un arbre creux dans lequel est disposée coaxialement une tige de réglage qui est reliée par un mécanisme de commande aux masses compensatrices (36a, 36b; 40a, 40b) tenues par des éléments porteurs et/ou au dispositif excentrique, du point de vue de la technique de réglage, et en ce que la tige de réglage est reliée par deux broches transversales (50, 52) espacées axialement à l'autre arbre creux, l'arbre intérieur, ces broches étant guidées respectivement de part et d'autre dans des fentes longitudinales (54, 55) de cet arbre creux; en ce qu'une (50) des broches est reliée, par un palier (56) qui permet un mouvement de rotation relatif entre cette broche (50) et l'arbre creux extérieur (32), à un levier coudé (93) dont le pivot est fixé sur l'arbre creux extérieur (32), lequel levier coudé (93) convertit le mouvement axial de la tige de commande, appliqué à un des bras du levier, en un mouvement essentiellement circulaire imparti à l'autre bras; et en ce que ce mouvement circulaire est transmis à des secteurs (66') d'une des deux masses compensatrices (36a, 36b); et en ce que l'autre broche transversale (52) est reliée à un autre levier coudé (95) dont le pivot est fixé axialement, lequel levier convertit le mouvement axial de la tige de commande, appliqué à un de ses bras, en un mouvement essentiellement circulaire imparti à l'autre bras; et en ce que ce mouvement circulaire est transmis aux secteurs respectifs (74) des deux autres masses compensatrices (40a, 40b).

3. Vibrateur selon la revendication 1 ou 2, caractérisé en ce que la tige de réglage (42) est reliée à un moteur de réglage, en particulier à un dispositif de réglage (48) hydraulique ou pneumatique.

4. Vibrateur selon une des revendications 1 à 3, caractérisé en ce que les éléments porteurs des masses compensatrices sont constitués de plateaux divisés (37a, 37b; 41a, 41b) en au moins deux parties, qui prennent appui respectivement par l'intermédiaire d'un palier (34; 38) sur l'autre arbre creux, l'arbre intérieur (22).

5. Vibrateur selon une des revendications 3 ou 4, caractérisé en ce que, sur les deux côtés des broches transversales (50, 52) sont disposés des organes suiveurs de cames (60, 70) qui sont associés respectivement aux plateaux divisés (37a, 37b; 41a, 41b) portant les masses compensatrices.

6. Vibrateur selon les revendications 4 ou 5, caractérisé en ce qu'au moins un plateau divisé (41a, 41b) portant des masses compensatrices (40a, 40b) est relié au dispositif excentrique (12).

7. Vibrateur selon la revendication 6, caractérisé en ce que le dispositif excentrique (12) se compose de deux éléments excentriques (14, 16) coaxiaux, et en ce que chaque élément excentrique (14, 16) est relié respectivement à un plateau divisé (41a, 41b).

8. Vibrateur selon une des revendications 1 à 7, caractérisé en ce qu'un dispositif de réglage (48) agissant sur la tige de réglage (42) coopère avec un embrayage (78) débrayable.

9. Vibrateur selon la revendication 8, caractérisé en ce qu'au moins un élément porteur des masses compensatrices est relié, par l'intermédiaire de l'embrayage (78) qui est débrayé pour le réglage, à l'autre arbre creux, l'arbre intérieur (22).

10. Vibrateur selon la revendication 8 ou 9, caractérisé en ce que l'embrayage est sous la forme d'un volant à inertie.

11. Vibrateur selon une des revendications 1 à 10, caractérisé en ce qu'un capteur enregistreur de vibrations est appliqué, qui émet, en cas de vibrations inadmissibles à cause de leur force, un signal qui provoque un arrêt rapide du vibrateur.
